Europäisches Patentamt

European Patent Office

Office européen des brevets

(19)

(11) Publication number: **0 045 327**

**A1**

## (12) EUROPEAN PATENT APPLICATION

(21) Application number: **80104615.2**

(22) Date of filing: **06.08.80**

(51) Int. Cl.³: **G 11 B 15/08**
**G 11 B 23/04**

(43) Date of publication of application:
**10.02.82 Bulletin 82/6**

(84) Designated Contracting States:
**AT BE CH FR IT LI LU NL SE**

(71) Applicant: **Efuti Giken Co.,LTD.**
**6-1-12, Rokkakubashi**
**Kanagawa-ku Yokohama-shi Kanagawa-ken(JP)**

(71) Applicant: **Funai Electric Co., Ltd.**
**7-627 Nakagaido**
**Daito-shi Osaka(JP)**

(72) Inventor: **Kawai, Tsutomu Yokosuka Heim Room 711**
**28, Ogawa-cho Yokosuka-shi**
**Kanagawa-ken(JP)**

(74) Representative: **Lehn, Werner, Dipl.-Ing. et al,**
**Hoffmann. Eitle & Partner Patentanwälte**
**Arabellastrasse 4**
**D-8000 München 81(DE)**

(54) Apparatus for detecting the end of a magnetic tape.

(57) Apparatus including a magnetic tape (4) having transparent lead tapes connected at both ends thereof which extends between a feed reel (2) and a take-up reel (3) in a cassette (1); a light receiving element (36) is incorporated into a positioning pole (7) located in said cassette (1) when the cassette (1) is in an operative position, whereas a light emitting element (38) is provided outside the cassette (1) at a point opposite to said light receiving element (36) and across said magnetic tape (4) interlaid between these two elements (36, 38). In this way, the two elements (36, 38) are adapted to detect the lead tape at the end of said magnetic tape (4).

Fig.1.

EP 0 045 327 A1

- 1 -

## Apparatus for detecting the end of a magnetic tape

This invention relates to a device for detecting the end of a magnetic tape in a cassette.

The primary object of this invention is to provide a device capable of detecting the tape end surely and rapidly by means of a light-emitting element and a light-receiving one.

According to the present invention there is provided apparatus for a cassette recorder for detecting the end of magnetic tape having transparent lead tapes connected at both ends thereof, which tape extends between a feed reel and a take up reel of a cassette, the apparatus including one of a light receiving, or a light emitting element located in said cassette when the cassette is in an operative position and the other of a light emitting or a light receiving element located on the apparatus outside the cassette, the magnetic tape interrupting the light path between the two elements, the arrangement being such that the light path is restored when a lead tape enters the light path to thereby provide an indication of the end of the tape.

An illustrated embodiment of the invention will now be described by way of example with reference to the accompanying drawings, in which:-

Fig. 1 is a fragmentary sectional plan view of part of a video tape recorder equipped with a device for detecting the tape end according to the present invention;

Fig. 2 is a view taken along the arrow line II-II in Fig.1;

Fig. 3 is a sectional view taken along the arrow line III-III in Fig. 1;

Fig. 4 is a plan view of a cassette;

Fig. 5 is a plan view showing the bottom of the cassette;

Fig. 6 is side elevational view of the cassette;

Fig. 7 is a perspective view showing the way in which a lead tape engages with the video tape;

Fig. 8 is a perspective view showing the way in which a tape pad is fixed to the band;

Fig. 9 is a plan view of the receiving plate;

Fig. 10 is a plan view of the base table; and,

Fig. 11 is an enlarged sectional view of the main part of the base table taken along the arrow line XI-XI in Fig. 10.

The reference numeral 1 represents a cassette which contains a video tape 4 extending between a feed reel 2 and a take-up reel 3.

The reference numeral 5 denotes a receiving plate on which the cassette 1 is mounted for insertion into the operating position, the remote end $5^1$ of the plate being pivotally fixed to the video tape recorder chassis so that the plate may pivot between operative and loading positions.

The numeral 6 denotes a base table to which poles 7, 7 for accurately positioning the cassette and said receiving plate are integrally secured.

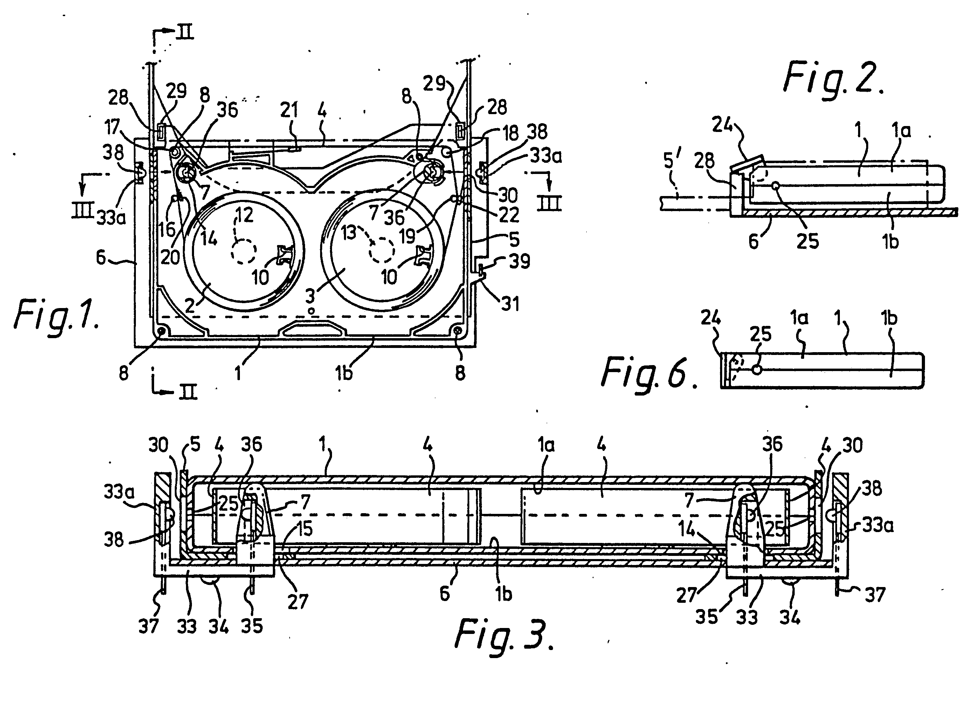

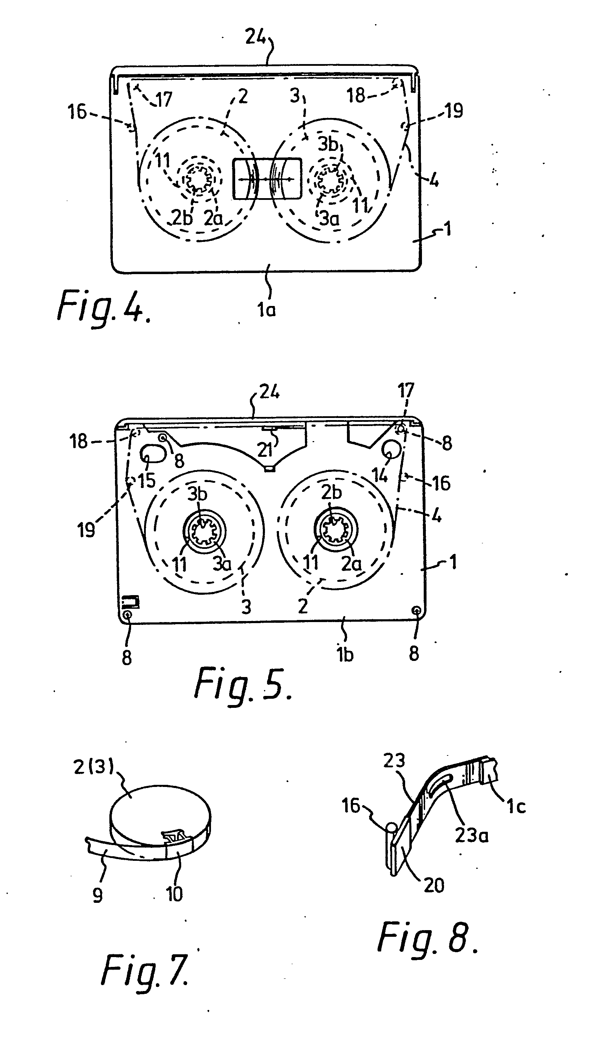

Referring to Figs. 4 to 8 in addition to Fig. 1, it will be seen that the cassette 1 comprises two case sections 1a, 1b which are securely connected to each other four small screws 8. The cassette contains a video tape 4 having transparent lead tapes 9 connected to both ends thereof,

- 3 -

respectively,(as shown in Fig. 7), and extending between the feed reel 2 and the take-up reel 3 which are rotatably mounted in the cassette 1 .

The lead tapes 9 are fixedly connected to the reels 2., 3 , at cutout parts thereof, respectively, by means of -shaped snaps 10 .

Splines 2b , 3b to be in mesh with the feeding reels shaft 12 and the take-up reel shaft 13 , respectively, are integrally formed within a cylindrical parts 2a , 3a , respectively, of said reels 2 , 3 , the shafts 12, 13 passing through round holes 11 , 11 , on the lower case 1b .

Further,the lower case 1b is provided with a plurality of tape guides 16 , 17 , 18 , 19 in addition to the holes 14 , 15 through which the positioning poles 7 , 7 , pass.

Still further, the lower case 1b is provided with tape pads, 20 , 21 , 22 ; and a flexible band 23 having an elongate aperature 23a is extended between the pad 20 and on upstanding rib 1c (see Fig. 8) of the case 1b .

A lid 24 is pivotally fixed to the open part on one side of the cassette 1 , and apertures 25 , (through which a ray of light passes from a light-emitting diode to a phototransistor to be described later), are provided on either side where the upper case 1a and the lower case 1b are in contact with each other.

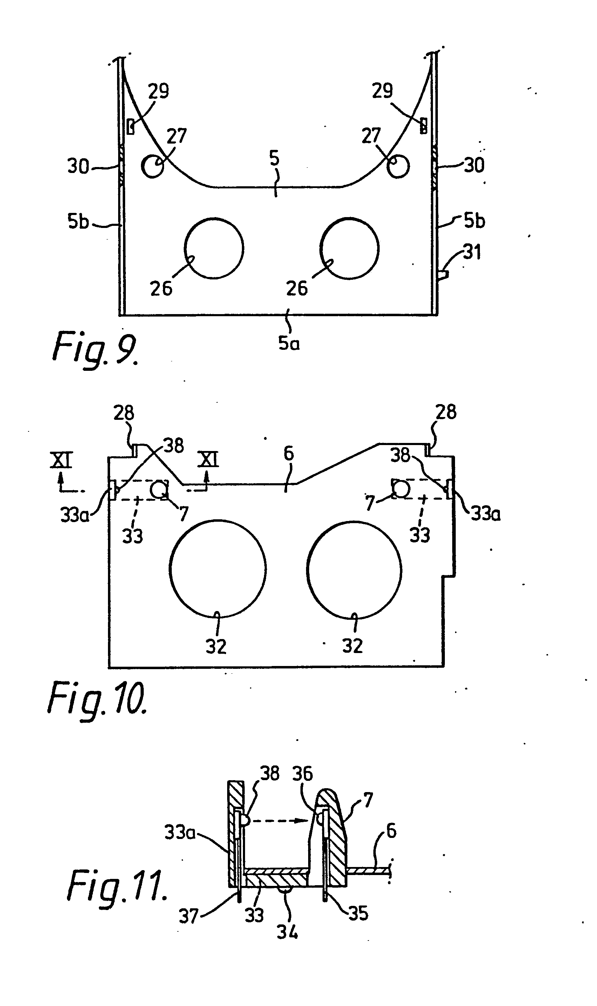

Now,referring to Fig. 9, the construction of the receiving plate 5 will be described as follows:

The receiving plate 5 consists of the horizontal portion 5a which supports the bottom of the lower case 1b and upstanding portions 5b , 5b which support both sides of the cassette 1 . The horizontal portion 5a is provided with round holes 26 , 26 of large diameter feed reel drive shaft and the take-up reel drive shaft, respectively, pass round holes 27 , 27 of small diameter for receiving the positioning poles 7 , 7 , and square holes 29 , 29 for receiving the projecting pieces 28 , 28 (see Fig. 10) which serve for opening the lid 24 of the cassette 1 as the cassette is inserted.

Apertures 30 , 30 for passing a ray of light from a light-emitting diode to a phototransistor to be described later are provided in said upstanding portions 5b , 5b , and a latch 31 for securely holding the receiving plate 5 on the base table 6 is integrally formed on one of the upstanding portions 5b , 5b .

Next, referring to Figs. 10 and 11, the construction of the base table (6) and peripheral portion thereof will be described.

This base table 6 is provided with holes 32 , 32 of large diameter for receiving the feed reel shaft 12 and the take-up reel shaft 13 , respectively, as well as the projecting portions 28 , 28 for opening the lid, which areformed by cutting and bending parts of this table .

Two U-shaped mounting pieces(33) with which the positioning poles 7 , 7 are integrally formed, are secured to this table 6 with small screws 34 . A light-receiving element with lead wire 35 , e.g., a phototransistor 36 is incorporated into the positioning pole 7 and a light-emitting element with lead wire 37 , e.g. a light-emitting diode 38 is fixed to the upstanding portion 33a of each piece 33 opposing said transistor 36 .

Incidentally, the numeral 39 in Fig. 1 denotes a hook for catching the latch 31 of the receiving plate 5 .

After the cassette 1 is set at a fixed position on the receiving plate 5 and when the plate 5 is pivoted to an operative position on the base table 6 for playing a tape, the hook 39 engages with the latch 31 for keeping the plate 5 down on the table 6 and causing the projections 28 , 28 to touch the lid 24 of the cassette 1 , the lid 24 , therefore, being made open as shown in Fig. 2. Through said holes 32 and 26 , the feed reel shaft 12 and the take-up reel shaft 13 engage the cylindrical parts 2a and 3a respectively. Also, as shown in Fig. 3, the positioning poles 7 , 7 engage in the cassette 1 through a holes 27 , 15 and holes 27, 14 respectively.

Thus, when the cassette 1 is set in the operative position on the video tape recorder, light from the light-emitting diode 38 is cast within the case 1 through the holes 30 , 25 but, when the magnetic tape is present, doesn't reach the phototransistor 36 since the ray of light is interrupted by the video tape 4 (part of the magnetic surface).

When the video tape 4 is completely taken up from one reel 2 to the other 3 or rewound from one 3 to the other 2 and, as a result, no strip of magnetic tape remains on any one of the reels 2 3 , the transparent lead tape 9 (refer to Fig. 7) connected to the ends of the video tape 4 is exposed to the path of light extending between the light-emitting diode 38 and the phototransistor 36, and, accordingly, light from the light-emitting diode 38 reaches the phototransistor 36 through, in turn, the holes 30, 25, and the transparent lead tape 9. The phototransistor is connected through its lead 35 to an electrical circuit which can provide an indication and in this way, an end of the video tape is detected.

When the tape end is detected in which way, detection output of the phototransistor 36 is, preferably, amplified for actuating an automatic stop mechanism which causes the video tape 4 to stop automatically.

Therefore, a device according to this invention is of such construction that a video tape 4 having both ends thereof connected to the transparent lead tapes 9 is extended between the feed reel 2 and the take-up reel 3 in the cassette 1, a light-receiving element, e.g., a phototransistor 36 is incorporated into the positioning pole 7 to be inserted into said cassette 1 when the cassette 1 is set at a fixed position, and a light-emitting element, e.g., a light-emitting diode 38, opposing the light-receiving element is provided on the base table 6 outside the cassette 1, these two elements 36, 38 being adapted to detect the lead tape 9 connected to said video tape.

In this way, the tape end can be detected surely and rapidly by the above two elements 36, 38 opposing with each other and automatic stopping of the tape 4 by utilising the output from these elements is also ensured.

Said light-receiving element, i.e. the phototransistor 36 is incorporated into the positioning pole 7 and accordingly requires no extra space for installation. This also produces a variety of advantages such as enabling easy incorporation of the elements into existing magnetic recording apparatus, i.e., a video tape recorder.

It is a matter of course that the same performance effect can be obtained even if the positions of the phototransistor 36 and the light-emitting diode 38 are interchanged from that described.

Claims:

1. Apparatus for a cassette recorder for detecting the end of magnetic tape (4) having transparent lead tapes (9) connected at both ends thereof, which tape (4) extends between a feed reel (2) and a take-up reel (3) of a cassette (1), characterized in that the apparatus includes one of a light receiving or a light emitting element (36, 38) located in said cassette (1) when the cassette (1) is in an operative position and the other of a light emitting or a light receiving element (38, 36) located on the apparatus outside the cassette (1), the magnetic tape (4) interrupting the light path between the two elements (36, 38), the arrangement being such that the light path is restored when a lead tape (9) enters the light path to thereby provide an indication of the end of the tape (4).

2. Apparatus as claimed in claim 1, characterized in that said indication is used to initiate operation of a stop mechanism to stop tape transport.

3. Apparatus as claimed in claim 1 or 2, characterized in that said one of the elements (36, 38) is located in a positioning pole (7) mounted on the apparatus and serving also to locate the cassette (1) when the cassette (1) is in an operative position.

4. Apparatus as claimed in claim 3 further including a receiving plate (5) on which the cassette (1) is locatable, the receiving plate (5) being pivotable to locate on a base table (6) to thereby locate the cassette (1) in the operative position, the base table (6) having secured thereto a U-shaped mounting piece (33), one of the limbs of which comprises said positioning pole (7), the other limb comprising an upstanding portion (33a) carrying the other of said elements (36, 38).

5. Apparatus as claimed in claim 3 or 4, characterized in that two positioning poles (7) are provided each carrying one of the elements (36, 38) and being associated with a respective other element (38, 36) to thereby provide indications of the end of respective ends of the tape (4).

Fig.1.

Fig.2.

Fig.6.

Fig.3.

7/3

0045327

Fig. 4.

Fig. 5.

Fig. 7.

Fig. 8.

Fig.9.

Fig.10.

Fig.11.

## DOCUMENTS CONSIDERED TO BE RELEVANT

| Category | Citation of document with indication, where appropriate, of relevant passages | Relevant to claim |
|---|---|---|
| X | US - A - 3 838 459 (G. BETTINI)<br><br>* Column 2, line 23 to column 3, line 54; column 7, lines 46-57; figures * | 1-5 |
| X | US - A - 3 823 945 (L.J. MILLIGAN)<br><br>* Column 2, lines 46-53; column 3, line 55 to column 5, line 65; figures * | 1-3,5 |
| X | US - A - 3 909 845 (K. ROTHLIS-BERGER)<br><br>* Column 2, lines 20-53; column 6, line 31 to column 7, line 12; figures * | 1-4 |
| X | CH - A - 600 479 (PAPST-MOTOREN)<br><br>* Column 1, line 63 to column 2, line 48; figures * | 1-4 |
| X | DE - B - 1 254 377 (BOSCH)<br><br>* Column 2, line 25 to column 4, line 4; figures * | 1-4 |
| X | FR - A - 2 098 778 (TEPPAZ)<br><br>* Page 3, line 28 to page 5, line 9; figures * | 1-4 |

CLASSIFICATION OF THE APPLICATION (Int. Cl.³)

G 11 B 15/08
23/04

TECHNICAL FIELDS SEARCHED (Int. Cl.³)

G 11 B 15/08
23/04
15/60

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 03.04.1981 | DECLAT |

EPO Form 1503.1  06.78